# EUROPEAN PATENT SPECIFICATION

(11) **EP 1 312 190 B1**
(45) Date of publication and mention of the grant of the patent: **09.04.2008**
(21) Application number: 00960493.5
(22) Date of filing: 18.08.2000
(51) Int. Cl.: H04L 29/06

(54) **WAP ENHANCED SIP**
WAP VERBESSERTES SIP
PROTOCOLE D'INITIATION DE SESSION (SIP) AMELIORE PAR UN PROTOCOLE D'APPLICATION SANS FIL

(43) Date of publication of application: 21.05.2003
(73) Proprietor: Nokia Siemens Networks Oy, 02610 Espoo (FI)
(72) Inventor: BOURET, Christophe Nokia Networks Oy, FIN-02150 Espoo (FI); TEINILA, Jaakko Nokia Networks Oy, FIN-02150 Espoo (FI); SALOMAA, Jyri Nokia Networks Oy, FIN-02150 Espoo (FI); KOSKELAINEN, Petri Nokia Networks Oy, FIN-02150 Espoo (FI)
(74) Representative: TBK-Patent
(86) International application number: PCT/EP2000/008097
(87) International publication number: WO 2002/017589

(56) References cited:
- EP-A- 1 028 561
- WO-A-00/18161
- PEHRSON S: "WAP-THE CATALYST OF THE MOBILE INTERNET" ERICSSON REVIEW,ERICSSON. STOCKHOLM,SE, no. 1, 2000, pages 14-19, XP000908190 ISSN: 0014-0171
- N LEAVITT: "WILL WAP DELIVER THE WIRELESS INTERNET ?" COMPUTER,IEEE COMPUTER SOCIETY, LONG BEACH., CA, US,US, vol. 33, no. 5, May 2000 (2000-05), pages 16-20, XP002158269 ISSN: 0018-9162

## Description

### FIELD OF THE INVENTION

The present invention relates to improvement of service provision in SIP (Session Initiation Protocol) environment by using WAP pages (e.g. Wireless Markup Language (WML) and WML scripts)

### BACKGROUND OF THE INVENTION

IP (Internet Protocol) Telephony is a fast changing domain. The 3GPP (Third Generation Partnership Project) started with H323 as a signaling standard for all IP 3G architecture and have finally adopted SIP (Session Initiation Protocol) in March 2000. SIP has been developed by the IETF (Internet Engineering Task Force) and it offers many tempting possibilities for service creation. SIP can e.g. be used for interactive games or multimedia messaging. SIP adoption induces a lot of changes in the supporting network and services.

WAP (Wireless Application Protocol) on the other hand, has been developed by telecom industry to offer menu-like services in a standard way over limited capacity wireless channel.

Many vendors and operators have made huge investments to WAP technology.

In existing telecom networks like GSM (Global System for Mobile Communications), PSTN (Public Switched Telephone Network), etc. communication services are voice centric and value added services are mostly based on supplementary service and Intelligent Network (IN) architectures. This service framework is quite static and it is quite difficult to add new advanced features. So, there is a need to have more flexible service architecture which can combine different kind of communication mechanisms (voice, mail, instant messaging, voice mail, etc.) and which provides a framework to deploy new innovative services in a flexible and fast way.

On the other hand there is a need to provide advanced communication services on small and inexpensive devices where memory and battery consumption are critical issues.

WTA (WAP Wireless Telephony Application ) can be used to implement services in WAP. WTA is a more centric service architecture. It needs more functionality in network side, thus making the implementation more complicated and less flexible.

In the WO 00/18161 A a method is described that enables applications utilizing the used application protocol to gain efficiently access to local resources in a straightforward and efficient manner. According to the WO 00/18161 A, applications applying the WAP application protocol are able to gain access to local resources which include e.g. a SIM card of a mobile station or an attachable smart card.

In the introductory part of the WO 00/18161 A it is described that, in order to gain access to servers located in the WWW network, WAP uses a gateway which also functions as a proxy containing functions for data transmission between a WAP protocol stack and a WWW protocol stack, as well as functions for coding and decoding the content of the information for data transmission. In the WAP, specified presentation formats are used to define the content of the information and the applications. The content is transferred using standardized data transmission protocols.

### SUMMARY OF THE PRESENT INVENTION

It is therefore an object of the present invention to create a simple and straightforward way to provide SIP services by reusing the mobile device Wireless Application Environment (WAE).

This object is achieved by a method according to claim 1. Moreover, the object is achieved by a network node according to claim 6 and a network node according to claim 7, as well as a packet data radio network according to claim 9.

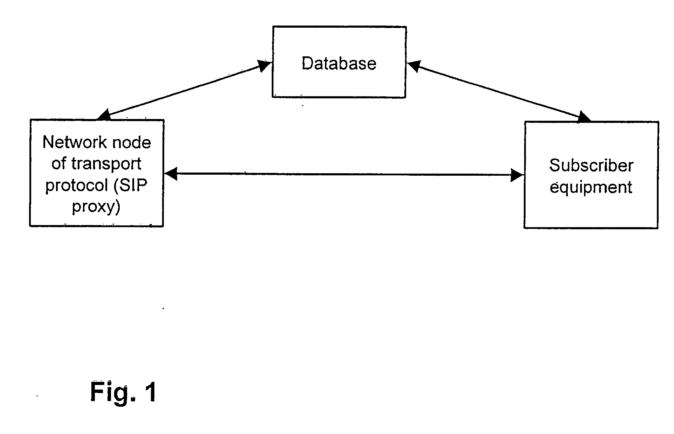

As shown in Fig. 1, a packet data radio network comprises a network node for providing services according to a specific protocol, for example SIP. A network node for providing services according to SIP is called SIP proxy. The SIP proxy may transmit a message to a subscriber equipment using normal SIP routing. It is to be noted that the operations explained between the proxy and the subscriber equipment are also applicable between two subscriber equipments.

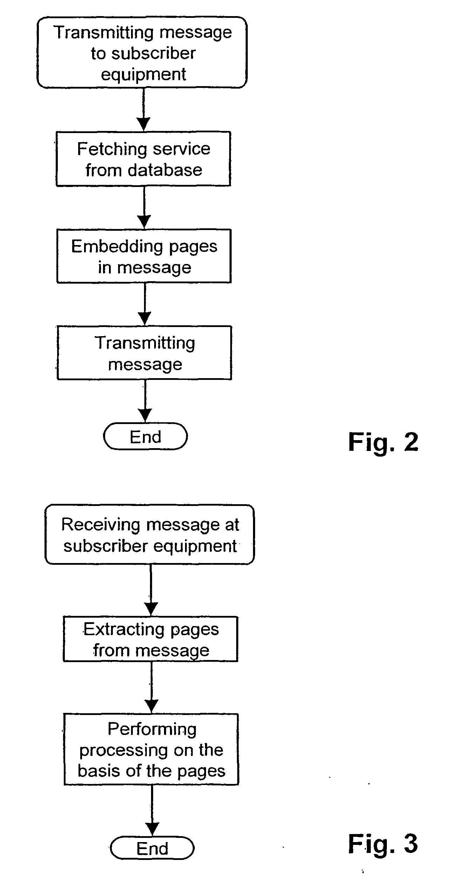

Referring also to Fig. 2, the SIP proxy may fetch a wireless application service from a database and embed pages according to the service in a message of the SIP protocol to be transmitted to the subscriber equipment. Then, it transmits the message to the subscriber equipment.

According to Fig. 3, at the subscriber equipment the pages according to the wireless application service are received in the message of the SIP protocol. The pages are extracted from the message and processing is performed in accordance with the extracted pages.

Before transmitting the message to the subscriber equipment, processing may be performed by the SIP proxy in accordance with the service fetched from the database.

Moreover, the message may be transmitted in accordance with subscriber information stored in the database.

Furthermore, data for initiating SIP protocol can be included in the pages to be embedded in the embedding step. Then, a service according to SIP protocol can be initiated at the subscriber equipment.

According to the present invention, the advantages of SIP and WAP are combined thus protecting the existing WAP investments. The possibilities of SIP may be utilized, market confusion can be avoided and the existence of WAP can be ensured. WAP is able to fully utilize all SIP features (redirecting/forwarding, URL addressing, etc.). This also extends the WAP usage to pure Internet networks, e.g. cable access networks.

According to the present invention, it is possible to integrate WAP and SIP thus gaining full advantages of both. This is extremely important for 3G vendors. For example, SIP can be used to send WAP messages all the way to the user equipment and SIP messages can be sent form the WAP application to utilize the advanced IP related services available in SIP.

The present invention defines that WAP data is sent over SIP bearer since SIP can carry whatever MIME payload, for example application/wap (to be defined). SIP has many features which may be utilized in this context (global URL addressing, seamless HTTP/RTSP/voice integration, packet forwarding, callee preferences, etc.). This seamless Internet resource integration enables many innovative services and makes WAP even more tempting for 3^{rd} party service providers.

The present invention strengthens WAP and protects the existing WAP investments and makes it even more tempting because of value-added features offered by SIP.

The present invention enables the provision of advanced services on small terminals.

In all IP 3G networks SIP protocol will be used to provide IP Telephony service. Future mobile terminals will also support WAP. By combining SIP and WAP the existing functionalities can be reused to provide enhanced and user-friendlier services. That is, the functionality of WAP can be reused to implement SIP services, and SIP services can be provided from WAP.

In the following the present invention will be described by way of a preferred embodiment thereof.

### BRIEF DESCRIPTION OF THE DRAWINGS

Fig. 1 shows a schematic block diagram of a network architecture according to the present invention.
Fig. 2 shows a flowchart comprising steps for transmitting a message to a subscriber equipment according to the present invention.
Fig. 3 shows a flowchart comprising steps for receiving a message at a subscriber equipment according to the present invention.
Fig. 4 shows a communication service example with WAP page according to a preferred embodiment of the present invention.

### DESCRIPTION OF THE PRESENT INVENTION

Currently WAP data is sent over GSM data or SMS (Short Message Service) bearer. In GPRS or in 3G it is possible to send WAP data over packet bearer also.

SIP is mandatory protocol between user equipment and network in 3G release R00, and it is used at least to call signaling. It may be used for other services also (e.g. SMS-like messaging). SIP may carry MIME (Multipurpose Internet Mail Extensions) payload (e.g. SDP (Short Data Protocol, gif, etc.) which is WAP in this case. The MIME-name to be defined in this case is application/wap. Standard WAP browsers may be used, only the transport layer is changed.

In other words, the basic idea is to embed WAP content to SIP messages and use SIP messages to transfer the WAP content to a terminal. When the terminal receives a SIP message including a WAP MIME type it extracts the WAP payload and processes it in the Wireless Application Environment (WAE).

WAP page could include WML (WAP markup language) pages and WML scripts reacting to user input and using the local available capabilities to satisfy to the user action.

SIP features e.g. URL based Internet addressing may also be used in WAP so that other true Internet resources (e.g. RTSP URL may be used to request a audiofile from remote RTSP server) may be accessed from WAP.

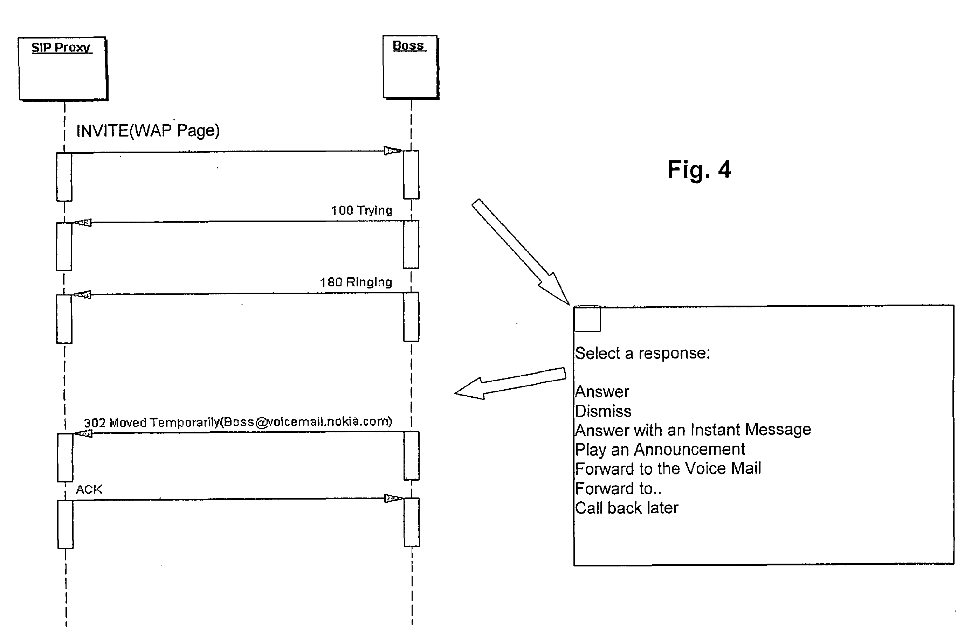

Fig. 4 shows a communication service example. A subscriber A is trying to call to a subscriber B or Boss. The subscriber B has a terminating call service, which provides a dynamic call management.

At first, the subscriber A sends a SIP Invite message through a SIP Proxy. The SIP proxy fetches the B subscribers service from a database and embeds it to SIP Invite message and sends it further to subscriber B.

Then, a subscriber B terminal or equipment receives the Invite message and extracts the WAP content from the message and delivers it to a Wireless Application Environment (WAE) to be processed.

A WAE browser shows communication alternatives to the user (e.g. answer, reject, send a short message, forward call to voicemail, forward call to secretary, play an announcement, etc.).

The user Selects one alternative from the list.
The selected alternative is executed through WAE service agents. E.g., if the subscriber B wants to direct the call to voice mail system SIP 302 moves a temporally message triggered through SIP service agent.

Also other SIP services like instant messages could be managed in WAE. WML and WML script could be used to edit and view instant messages. However, the present invention is not limited to WML and WML scripts, but also covers next generation WAP content types, i.e. XML.

Symmetrically a SIP tag could be added to the WAP markup language (WML) to support a click to call. A WAP page could include a sip:christophe.bouret@nokia.com tag that when selected would initiate a SIP request. This system would enable the creation of a WAP based phone book with a direct click to call for example or a click to call for assistance.

Alternatively, JAVA and SIP could be used. A SIP client with all the functionality needed could be installed to the terminal.

While the invention has been described with reference to a preferred embodiment, the description is illustrative of the invention and is not to be construed as limiting the invention. Various modifications and applications may occur to those skilled in the art without departing from the scope of the invention as defined by the appended claims.

## Claims

1. A method of providing services in Session Initiation Protocol environment by using Wireless Application Protocol pages, the method comprising the steps of:
fetching a wireless application service from a database;
embedding Wireless Application Protocol pages according to the service in a Session Initiation Protocol message to be transmitted to a subscriber equipment;
transmitting the Session Initiation Protocol message to the subscriber equipment;
receiving the Wireless Application Protocol pages in the Session Initiation Protocol message at the subscriber equipment;
extracting the Wireless Application Protocol pages from the Session Initiation Protocol message; and
performing processing in accordance with the Wireless Application Protocol pages.

2. A method according to claim 1, further comprising the step of:
before transmitting the Session Initiation Protocol message to the subscriber equipment, performing processing in accordance with the wireless application service fetched from the database.

3. A method according to claim 1, wherein the Session Initiation Protocol message is transmitted in accordance with subscriber information stored in the database.

4. A method according to claim 1, wherein data for initiating Session Initiation Protocol are included in the Wireless Application Protocol pages to be embedded in the embedding step.

5. A method according to claim 4, wherein a service according to the Session Initiation Protocol can be initiated at the subscriber equipment on the basis of the data for initiating the Session Initiation Protocol.

6. A network node in a packet data radio network for providing services in Session Initiation Protocol environment by using Wireless Application Protocol pages, the network node comprising:
means for fetching a wireless application service from a database;
means for embedding Wireless Application Protocol pages according to the service in a Session Initiation Protocol message to be transmitted to a subscriber equipment; and
means for transmitting the Session Initiation Protocol message to the subscriber equipment.

7. A network node in a packet data radio network for providing wireless application services in Session Initiation Protocol environment, the network node comprising:
means for receiving Wireless Application Protocol pages according to a wireless application service in a Session Initiation Protocol message at the network node;
means for extracting the Wireless Application Protocol pages from the Session Initiation Protocol message; and
means for performing processing in accordance with the Wireless Application Protocol pages.

8. A network node according to claim 7, wherein the network node is a subscriber equipment.

9. A packet data radio network, comprising a network node according to claim 6 and a network node according to claim 7 or 8.

## Patentansprüche

1. Verfahren zum Bereitstellen von Diensten in einer Session-Initiation-Protokoll-Umgebung durch Verwenden von Drahtlos-Anwendungsprotokoll-Seiten, wobei das Verfahren die Schritte aufweist:
Abrufen eines drahtlosen Anwendungsdienstes von einer Datenbank;
Einbetten von Drahtlos-Anwendungsprotokoll-Seiten gemäß dem Dienst in eine an ein Teilnehmergerät zu übertragende Session-Initiation-Protokoll-Nachricht;
Übertragen der Session-Initiation-Protokoll-Nachricht an das Teilnehmergerät;
Empfangen der Drahtlos-Anwendungsprotokoll-Seiten in der Session-Initiation-Protokoll-Nachricht an dem Teilnehmergerät;
Extrahieren der Drahtlos-Anwendungsprotokoll-Seiten aus der Session-Initiation-Protokoll-Nachricht; und
Durchführen einer Verarbeitung gemäß der Drahtlos-Anwendungsprotokoll-Seiten.

2. Verfahren nach Anspruch 1, ferner mit dem Schritt:
Durchführen eines Verarbeitens gemäß dem von der Datenbank abgerufenen drahtlosen Anwendungsdienst vor einem Übertragen der Session-Initiation-Protokoll-Nachricht an das Teilnehmergerät.

3. Verfahren nach Anspruch 1, wobei die Session-Initiation-Protokoll-Nachricht gemäß in der Datenbank gespeicherten Teilnehmerinformationen übertragen wird.

4. Verfahren nach Anspruch 1, wobei Daten zum Initiieren eines Session-Initiation-Protokolls in den in dem Einbettungsschritt einzubettenden Drahtlos-Anwendungsprotokoll-Seiten enthalten sind.

5. Verfahren nach Anspruch 4, wobei ein Dienst gemäß dem Session-Initiation-Protokoll an dem Teilnehmergerät auf der Grundlage der Daten zum Initiieren des Session-Initiation-Protokolls initiiert werden kann.

6. Netzwerkknoten in einem Paketdatenfunknetzwerk zur Bereitstellung von Diensten in einer Session-Initiation-Protokoll-Umgebung unter Verwendung von Drahtlos-Anwendungsprotokoll-Seiten, wobei der Netzwerkknoten aufweist:
eine Einrichtung zum Abrufen eines drahtlosen Anwendungsdienstes von einer Datenbank;
eine Einrichtung zur Einbettung der Drahtlos-Anwendungsprotokoll-Seiten gemäß dem Dienst in eine an ein Teilnehmergerät zu übertragende Session-Initiation-Protokoll-Nachricht; und
eine Einrichtung zur Übertragung der Session-Initiation-Protokoll-Nachricht an das Teilnehmergerät.

7. Netzwerkknoten in einem Paketdatenfunknetzwerk zur Bereitstellung von drahtlosen Anwendungsdiensten in einer Session-Initiation-Protokoll-Umgebung, wobei der Netzwerkknoten aufweist:
eine Einrichtung zum Empfang von Drahtlos-Anwendungsprotokoll-Seiten gemäß einem drahtlosen Anwendungsdienst in einer Session-Initiation-Protokoll-Nachricht an dem Netzwerkknoten;
eine Einrichtung zur Extrahierung der Drahtlos-Anwendungsprotokoll-Seiten aus der Session-Initiation-Protokoll-Nachricht; und
eine Einrichtung zur Durchführung einer Verarbeitung gemäß den Drahtlos-Anwendungsprotokoll-Seiten.

8. Netzwerkknoten nach Anspruch 7, wobei der Netzwerkknoten ein Teilnehmergerät ist.

9. Paketdatenfunknetzwerk mit einem Netzwerkknoten nach Anspruch 6 und einem Netzwerkknoten nach Anspruch 7 oder 8.

## Revendications

1. Procédé destiné à fournir des services dans un environnement de protocole d'initiation de session en utilisant des pages de protocole d'application sans fil, le procédé comportant les étapes consistant à :
extraire un service d'application sans fil à partir d'une base de données ;
intégrer des pages de protocole d'application sans fil selon le service dans un message de protocole d'initiation de session à transmettre à un équipement d' abonné ;
transmettre le message de protocole d'initiation de session à l'équipement d'abonné ;
recevoir les pages de protocole d'application sans fil dans le message de protocole d'initiation de session à l'équipement d' abonné ;
extraire les pages de protocole d'application sans fil du message de protocole d'initiation de session ; et
exécuter un traitement selon les pages de protocole d'application sans fil.

2. Procédé selon la revendication 1, comportant en outre l'étape consistant à :
avant de transmettre le message de protocole d'initiation de session à l'équipement d'abonné, exécuter un traitement selon le service d'application sans fil extrait à partir de la base de données.

3. Procédé selon la revendication 1, dans lequel le message de protocole d'initiation de session est transmis selon les informations d'abonné stockées dans la base de données.

4. Procédé selon la revendication 1, dans lequel des données en vue d'initier un protocole d'initiation de session sont incluses dans les pages de protocole d'application sans fil à intégrer à l'étape d'intégration.

5. Procédé selon la revendication 4, dans lequel un service selon le protocole d'initiation de session peut être initié à l'équipement d'abonné sur la base des données destinées à initier le protocole d'initiation de session.

6. Noeud de réseau dans un réseau radio de données par paquets en vue de fournir des services dans un environnement de protocole d'initiation de session en utilisant des pages de protocole d'application sans fil, le noeud de réseau comportant :
des moyens en vue d'extraire un service d'application sans fil à partir d'une base de données ;
des moyens en vue d'intégrer des pages de protocole d'application sans fil selon le service dans un message de protocole d'initiation de session à transmettre à un équipement d'abonné ; et
des moyens en vu de transmettre le message de protocole d'initiation de session à l'équipement d'abonné ;

7. Noeud de réseau dans un réseau radio de données par paquets en vue de fournir des services d'application sans fil dans un environnement de protocole d'initiation de session, le noeud de réseau comportant :
des moyens en vue de recevoir des pages de protocole d'application sans fil selon un service d'application sans fil dans un message de protocole d'initiation de session à l'équipement d'abonné ;
des moyens en vue d'extraire les pages de protocole d'application sans fil du message de protocole d'initiation de session ; et
des moyens en vue d'exécuter un traitement selon les pages de protocole d'application sans fil.

8. Noeud de réseau selon la revendication 7, dans lequel le noeud de réseau est un équipement d'abonné.

9. Réseau radio de données par paquets comportant un noeud de réseau selon la revendication 6 et un noeud de réseau selon la revendication 7 ou 8.
